# EUROPEAN PATENT SPECIFICATION

(11) **EP 2 109 532 B1**
(45) Date of publication and mention of the grant of the patent: **02.03.2011**
(21) Application number: 08702561.5
(22) Date of filing: 04.02.2008
(51) Int. Cl.: B32B 5/02, C08J 5/04

(54) **PRE-IMPREGNATED MATERIAL WITH SEMI-CRYSTALLINE MATRIX AND AMORPHOUS SURFACE LAYER**
VORIMPRÄGNIERTES MATERIAL MIT HALBKRISTALLINER MATRIX UND AMORPHER OBERFLÄCHENSCHICHT
MATIÈRE PRÉIMPRÉGNÉE COMPORTANT UNE MATRICE SEMICRISTALLINE ET UNE COUCHE SUPERFICIELLE AMORPHE

(30) Priority: 05.02.2007 IT TO20070079
(43) Date of publication of application: 21.10.2009
(73) Proprietor: Alenia Aeronautica S.p.A., 80038 Pomigliano D'Arco (Napoli) (IT)
(72) Inventor: IANNONE, Michele, I-80058 Torre Annunziata (Napoli) (IT)
(74) Representative: Fioravanti, Corrado
(86) International application number: PCT/IB2008/050400
(87) International publication number: WO 2008/096312

(56) References cited:
- DE-A1- 19 604 611
- GB-A- 2 276 933
- DATABASE WPI Week 199546 Derwent Publications Ltd., London, GB; AN 1995-354770 XP002478269 -& JP 07 241920 A (SHIKOKU SOGO KENKYUSHO KK) 19 September 1995 (1995-09-19)

## Description

The present invention relates to pre-impregnated materials.

As is known, pre-impregnated materials (also commonly known as prepregs) are composite materials that are used in various industrial fields and in the aeronautical industry in particular. A prepreg is generally a semi-finished product comprising reinforcing fibres and a resin matrix in which the fibres are embedded. The fibres may be arranged in various configurations, for example, in a unidirectional layer, in two layers having different orientations, or as fabric. Prepregs are generally prepared in the form of tapes and wound in rolls.

The prepregs that are used mainly in the aeronautical industry have thermosetting-resin matrices which have tackiness characteristics prior to polymerization. They can therefore be used to form lay-ups by placing different layers on top of one another with a suitable sequence of orientations of the various layers. The lay-ups are then subjected to a temperature and pressure cycle (in a vacuum bag and in an autoclave) which causes the material to polymerize, increasing its molecular weight and promoting the formation of bonds between the macromolecules (cross-linking) transforming it into a material with structural characteristics suitable for use.

The lamination can also be performed by automated methods which bring significant advantages in terms of cost, productivity and repeatability. For flat or moderately curved lay-ups, apparatus known as an automated tape layer machine is used. A technique has also recently been established which enables curved surfaces, and even closed (cylindrical) surfaces, to be laminated with the use of fairly narrow prepreg tapes (known as slits); this technique is known as Fibre Placement and is already used for composite parts with thermosetting matrices.

Prepregs with matrices of thermoplastic material are also used in the aeronautical industry. For prepregs based on thermoplastic materials, the resin has a high molecular weight and therefore, on the one hand, does not need to be subjected to a polymerization cycle but, on the other hand, does not have tackiness characteristics. A prepreg with a thermoplastic matrix can, as a first approximation, be considered as a product in the final state, formed by a single layer. In order to be able to form a laminate, it is therefore necessary to heat it so as to melt the thermoplastic pre-impregnated layers of which it is composed, to compact it under pressure, and then to cool it. The temperature to be reached for the melting is the glass transition temperature T_{g} for amorphous thermoplastics and the melting point T_{f} for semi-crystalline thermoplastics.

At the moment, automated tape layer techniques (ATL) and fibre placement techniques (FP) are used solely for composite parts with thermosetting matrices. They are techniques which are also theoretically possible for prepregs with thermoplastic matrices but which have some additional technological requirements; in fact, in this case, the apparatus for producing a laminate based on thermoplastic prepregs must also provide the heat to reach a temperature (which may be too high, according to the material) such as to melt the resin and thus achieve adhesion between the layers of the laminate; moreover, for semi-crystalline thermoplastics, excessively rapid cooling could lead to amorphization of the part, resulting in a loss of performance characteristics. In compensation, if these problems were solved, the ATL and FP techniques would enable finished parts to be produced without further processing in an autoclave, with great reductions in the costs of producing the parts.

These problems are solved, according to the invention, by methods for manufacturing a composite part having the characteristics defined in independent claims 1 and 2.

With the pre-impregnated material according to the invention, it is possible to implement an automatic lamination process without excessively onerous operational demands since, for the compaction and hence to produce the laminate, it is necessary to reach only the glass transition temperature T_{g} of the amorphous thermoplastic-based layer; moreover, since solely the amorphous layer is melted in the process and not the semi-crystalline thermoplastic-based layer, it is not necessary to control the cooling rate.

Preferred embodiments of the invention are defined in the dependent claims.

Further subjects of the invention are methods of producing a pre-impregnated material according to the invention and a method for the automatic lamination of a plurality of pre-impregnated layers according to the invention.

Some preferred but non-limiting embodiments of the invention will now be described with reference to the appended drawings, in which:
Figure 1 is a schematic view showing a prepreg according to the invention, in section,
Figure 2 is a diagram which illustrates a possible implementation of a method for the manufacture of the prepreg of Figure 1, and
Figure 3 is a diagram which illustrates a further possible implementation of a method for the manufacture of the prepreg of Figure 1.

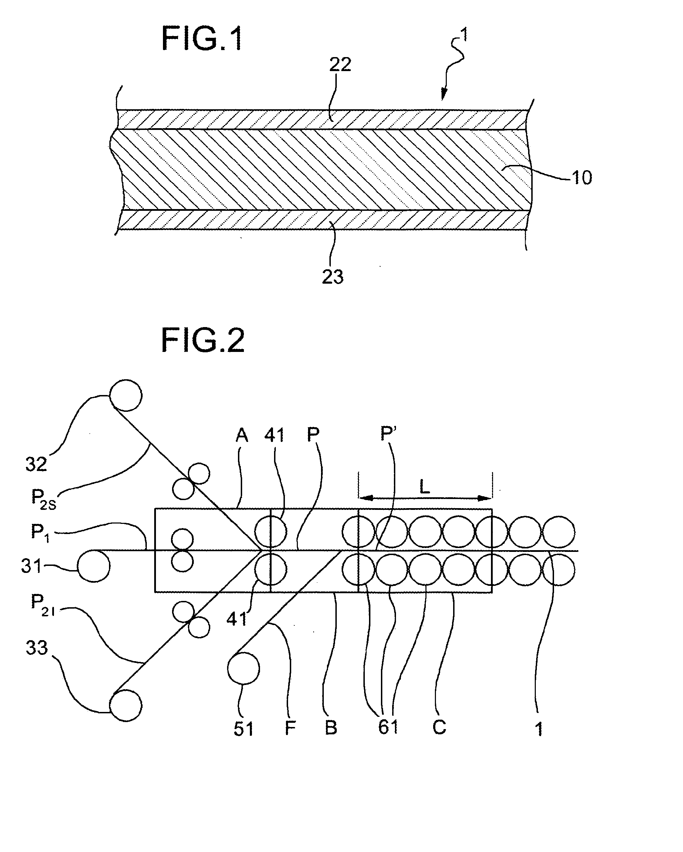

With reference to Figure 1, a prepreg 1 according to the invention is shown schematically. The prepreg 1 comprises a matrix based on resin reinforced with a fibre material. The fibre material may be composed of fibre of any type known in the field, for example, glass fibre, carbon fibre, or a combination of these. Moreover, the fibres may be arranged in different configurations, for example, in a unidirectional layer, in several layers having different orientations, or as fabric. In any case, the composition and the arrangement of the fibres are not essential for the purposes of the invention.

The prepreg 1 according to the invention comprises an inner layer 10 whose matrix is based on semi-crystalline thermoplastic resin having a melting point T_{f}. The semi-crystalline thermoplastic resin is, for example, polyether ether ketone, or PEEK, which has a melting point T_{f} of about 350°C. An outer layer 22, 23 based on amorphous thermoplastic resin having a glass transition temperature T_{g} is applied to at least one side of the inner layer 10 and preferably to both sides, the glass transition temperature T_{g} of the amorphous thermoplastic resin being below the melting point T_{f} of the semi-crystalline thermoplastic resin. The amorphous thermoplastic.resin is, for example, poly(ether imide), or PEI, which has a glass transition temperature T_{g} of about 200°C.

The term "based on" means that the matrix, or the outer layer 22, 23 of the matrix, may also comprise commonly used additives such as, for example, fillers, stabilizers, etc. in addition to the resin.

An embodiment of a method for producing a prepreg according to the present invention is now described with reference to Figure 2.

First of all a roll 31 of semi-crystalline thermoplastic resin and two rolls 32 and 33 of amorphous thermoplastic resin are prepared. A tape P₁ of semi-crystalline thermoplastic resin film and two tapes P_{2S} and P_{2I} of amorphous thermoplastic resin film are supplied from the rolls 31, 32 and 33, respectively. All of the tapes have the same width which is equal to that of the prepreg to be produced. Prepregs for automatic lamination typically have widths of from 7.62 cm to 30.48 cm (from 3" to 12").

The tapes P₁, P_{2S}, and P_{2I} are passed through a heating chamber A in which they are heated to a temperature above the melting point T_{f} of the semi-crystalline thermoplastic resin, and in which they are compacted with rollers 41 into a single film P. Immediately after compaction, the tape of film P at high temperature is transported into a constant-temperature zone B where it meets reinforcing fibres F which are supplied in the zone B in the form, for example, of threads or fabric tape, from one or more rolls 51. In the zone B, the multi-layered resin film is caused to penetrate between the fibres by hot rolling. Immediately after the interpenetration of fibre and resin (impregnation) the product (tape of reinforced film P') is passed through successive rollers 61 in a chamber C which is progressively colder (the rollers 61 also being progressively colder) until a temperature below the melting point of the semi-crystalline thermoplastic resin is reached at the output of the chamber C. A prepreg 1 according to the invention is thus obtained. To prevent amorphization of the semi-crystalline thermoplastic resin, the cooling rate must not be above a predetermined threshold K (expressed as degrees per unit of time) depending on the material used. If the temperature difference between the input and the output of the chamber C is indicated ΔT, the length of the chamber C is indicated L, and the speed of movement of the product is indicated V, the length L of the chamber C must be no less than V·ΔT/K.

Naturally, after the controlled cooling stage, there is a subsequent cooling stage (not shown) such as to reach a temperature below the glass transition temperature of the amorphous thermoplastic resin and then room temperature.

A preferred example of a prepreg according to the invention is a prepreg in which the fibre is a carbon fibre of the Intermediate Module or Intermediate Strength type (for example, AS4 or IM7) and the matrix is of thermoplastic resin obtained by placing a PEEK film between two PEI films. Even more preferably, the prepreg has a thickness of about 0.250 mm with a percentage by weight of thermoplastic resin of about 37% of the overall weight of the prepreg, and a weight per unit area of the carbon fibre of about 290 g/m², the matrix being obtained from a PEEK film having a thickness of about 0.080 mm and from two PEI films each having a thickness of about 0.020 mm. The selection of these film thicknesses is particularly preferred since it provides semi-crystalline/amorphous proportions which represent a compromise between the need to reduce the amorphous portion to the minimum to preserve the structural properties, and the need to have a sufficient quantity for good adhesion between the prepregs in the lamination process.

In this case, the maximum temperature reached in the chamber A and in the zone B in a process such as that shown in Figure 2 will have to be above the T_{f} of the PEEK, for example, about 380°C. This temperature is preferred since it is high enough to permit a degree of liquidity of the resin for workability requirements but low enough to prevent thermal degradation phenomena. To reduce as far as possible the risk of amorphization of the PEEK, it is necessary to control the rate of cooling not only down to the melting point but also to a lower temperature, for example, 320°C. Thus, if the temperature at the output of the chamber C is 320°C, then ΔT=60°C. To prevent amorphization of the PEEK, the cooling rate must be ≤ 100°C/min. This value has been selected so as to be conservatively within a cooling window which ranges from 10°C/min. to 300°C/min. It is reported in the literature that this window produces a substantially constant crystallinity of the PEEK (J. Kenny, A. D'Amore, L. Nicolais, M. Iannone and B. Scatteia - Processing of Amorphous PEEK and Amorphous PEEK Based Composites - SAMPE Journal, 25 (4), 1989). Since it is necessary to have a cooling rate ≤ 100°C/min, if V=0.1 m/s, L will have to be greater than 3.6 m.

An alternative embodiment of a method of producing a prepreg according to the present invention is now described.

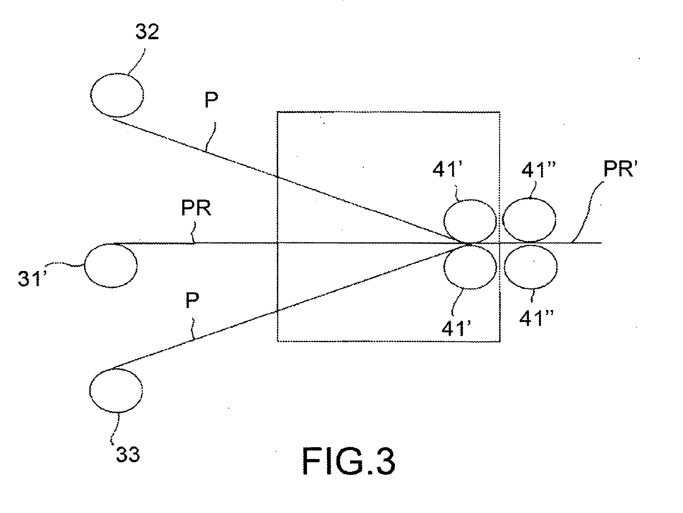

Figure 3 shows a previously manufactured roll of prepreg 31' which, by way of preferred example, has, as reinforcement, a carbon fibre of the Intermediate Module or Intermediate Strength type (for example AS4 or IM7), and a matrix of PEEK semi-crystalline thermoplastic resin. Even more preferably, the prepreg has a thickness of about 0.210 mm, obtained starting with a thickness of about 0.080 mm of resin and 290 g/m² of carbon fibre. The selection of these quantities is obtained from the optimized selection for a PEEK/carbon fibre prepreg, with the resin being reduced in view of a subsequent addition of amorphous PEI film.

The prepreg is produced by a standard process for PEEK/carbon fibre prepregs with care being taken that the process is such as to achieve the correct crystallinity content by control of the rate of cooling of the film (≤100°C/min.; the reasons for this selection are given above).

A continuous prepreg tape PR is thus extracted from the roll 31'. Two tapes P_{2S} and P_{2I} of amorphous thermoplastic resin film, preferably PEI, each having a thickness of about 0.020 mm, are added to the prepreg tape PR with the use of hot rollers 41' with a surface temperature of about 370°C such as to melt the PEI film and purely the surface of the prepreg PR. A single tape PR' is thus obtained.

The tape PR', which is constituted by the prepreg to which the two amorphous thermoplastic films are joined, is then passed through two cold rollers 41". In this case there is no amorphization problem since the greater part of the prepreg remains below the melting point during the process.

The prepreg produced in accordance with the invention with the use of the method of Figure 2 or of Figure 3, or any variants thereof that may be devised by a person skilled in the art can be used in the manufacture of composite parts by automatic lamination technology (ATL or FP) at a temperature above the T_{g} of the amorphous thermoplastic resin and below the T_{f} of the semi-crystalline thermoplastic resin. With the prepreg according to the invention, the lamination process can thus take place at a relatively low temperature which is nevertheless sufficient to lead to melting solely of the amorphous resin layers and thus to achieve a tackiness of the prepreg layers whereas the semi-crystalline resin layer does not melt and the problems which would be connected with such melting and with the consequent control of the rate of cooling described in the introductory portion of the present description do not arise.

The principle upon which the automatic lamination of the prepreg according to the invention is based is somewhat analogous to the welding technique for parts made of composite material with a semi-crystalline thermoplastic matrix which is known as amorphous bonding (C. Voto and M. Iannone - Environmental Resistance of Amorphous Bonded Thermoplastic Joints - AGARD Report 785 - 1991). This technique consists of the manufacture of the parts with an amorphous thermoplastic outer layer. When the parts thus made are brought above the T_{g} of the amorphous material, they are tacky externally but preserve their shape. When they are brought together under pressure and heated, they tend to adhere and continue to adhere when the part cools; the process may also provide for an additional film of amorphous material between the adhering films to compensate for any defective coupling between them. In contrast with this known technique, however, the present invention involves a prepreg, that is, a semi-finished product which is ready for the production of composite parts by automatic lamination processes.

If a composite obtained from a prepreg produced as described in the above-mentioned example is compared with a composite obtained from a conventional prepreg with PEEK and carbon fibre, for a given fibre weight per unit area and resin content, the mechanical properties of the composite obtained from the prepreg according to the invention (tension, compression, in-plane shear, open-hole tension and compression, compression after impact) are substantially equivalent to those of the composite obtained from the conventional prepreg, with the exception of the interlaminar shear properties which, for the composite obtained from the prepreg according to the invention, are no less than 90% of the interlaminar shear properties of the composite obtained from the conventional prepreg.

Moreover, from the point of view of the process for the automatic lamination of the prepreg to produce the composite, the process is greatly simplified since, for the compaction, it is necessary to reach a temperature of about 210°C (a temperature which is sufficiently above the T_{g} of the PEI to ensure its transition and to permit tackiness) for the prepreg according to the invention, compared with a temperature of about 350°C to be reached for the conventional prepreg. Moreover, for the conventional prepreg, it is necessary to control the cooling temperature, whereas that is not necessary for the prepreg according to the invention.

## Claims

1. A method for manufacturing a composite part, **characterised by** comprising the following steps:
- preparing a three-layer tape, comprising the following substeps:
- advancing a continuous tape (PR) of semi-crystalline thermoplastic resin reinforced with a fibre material, said semi-crystalline thermoplastic resin having a melting point T_{f},
- advancing two continuous tapes (P_{2S}, P_{2I}) of amorphous thermoplastic resin from opposite sides of the tape of semi-crystalline thermoplastic resin, respectively, said amorphous thermoplastic resin having a glass transition temperature T_{g} which is below the melting point T_{f} of the semi-crystalline thermoplastic resin,
- heating the semi-crystalline and amorphous tapes to a temperature such as to melt the tapes of amorphous resin and such as to melt the tape of semi-crystalline resin only on its outer surface, and roll-pressing the tapes of amorphous thermoplastic resin against the tape of semi-crystalline resin so as to join these tapes into a single continuous, compacted tape (PR'), and
- cooling the compacted tape; and
- automatically laminating a plurality of layers of the compacted
tape at a temperature above the glass transition temperature T_{g} of the amorphous thermoplastic resin and below the melting point T_{f} of the semi-crystalline thermoplastic resin.

2. A method for manufacturing a composite part, **characterised by** comprising the following steps:
- preparing a three-layer tape, comprising the following substeps:
- advancing a continuous tape (P₁) of semi-crystalline thermoplastic resin, said semi-crystalline thermoplastic resin having a melting point T_{f},
- advancing two continuous tapes (P_{2S}, P_{2I}) of amorphous thermoplastic resin from opposite sides of the tape of semi-crystalline thermoplastic resin, respectively, said amorphous thermoplastic resin having a glass transition temperature T_{g} which is below the melting point T_{f} of the semi-crystalline thermoplastic resin,
- heating the semi-crystalline and amorphous tapes to a temperature above the melting point T_{f} of the semi-crystalline thermoplastic resin such as to melt the tapes of amorphous and semi-crystalline resin, and roll-pressing the tapes of amorphous thermoplastic resin against the tape of semi-crystalline resin so as to join these tapes into a single continuous, compacted tape (P),
- advancing a fibre material (F),
- impregnating the fibre material with the compacted tape so as to produce a reinforced tape (P'); and
- cooling the compacted tape until a temperature below the melting point T_{f} of the semi-crystalline thermoplastic resin is reached, said cooling being at a cooling rate sufficiently low to prevent amorphization of the semi-crystalline resin; and
- automatically laminating a plurality of layers of the compacted tape at a temperature above the glass transition temperature T_{g} of the amorphous thermoplastic resin and below the melting point T_{f} of the semi-crystalline thermoplastic resin.

3. A method according to Claim 1 or Claim 2 in which the semi-crystalline thermoplastic resin is PEEK.

4. A method according to any one of Claims 1 to 3 in which the amorphous thermoplastic resin is PEI.

5. A method according to any one of the preceding claims in which the fibre material is composed of carbon fibres.

## Patentansprüche

1. Verfahren zur Herstellung eines Verbundteils **gekennzeichnet durch** folgende Schritte:
- Vorbereiten eines dreilagigen Bandes, mit den folgenden Unterschritten:
- Zuführen eines fortlaufendes Bandes (PR) aus mit einem Fasermaterial verstärktem halbkristallinem thermoplastischem Harz, wobei das halbkristalline thermoplastische Harz einen Schmelzpunkt T_{f} aufweist,
- Zuführen von zwei fortlaufenden Bändern (P_{2S} P_{2I}) aus amorphem thermoplastischem Harz von jeweils gegenüberliegenden Seiten des Bandes aus halbkristallinem thermoplastischem Harz, wobei das amorphe thermoplastische Harz eine Glasübergangstemperatur T_{g} hat, welche unter dem Schmelzpunkt T_{f} des halbkristallinen thermoplastischen Harzes liegt,
- Erwärmen der halbkristallinen und amorphen Bänder auf eine solche Temperatur, dass die Bänder aus amorphem Harz schmelzen und dass das Band aus halbkristallinem Harz nur an seiner Außenseite schmilzt, und Walz-Pressen der Bänder aus amorphem thermoplastischem Harz gegen das Band aus halbkristallinem Harz, um diese Bänder in ein einzelnes, fortlaufendes, komprimiertes Band (PR') zu vereinigen, und
- Kühlen des komprimierten Bandes; und
- Automatisches Laminieren einer Vielzahl von Schichten des komprimierten Bandes bei einer Temperatur oberhalb der Glasübergangstemperatur T_{g} des amorphen thermoplastischen Harzes und unterhalb des Schmelzpunkts T_{f} des halbkristallinen thermoplastischen Harzes.

2. Verfahren zur Herstellung eines Verbundteils **gekennzeichnet durch** folgende Schritte:
- Vorbereiten eines dreilagigen Bandes, umfassend die folgenden Unterschritte:
- Zuführen eines fortlaufendes Bandes (Pₗ) aus halbkristallinem thermoplastischem Harz, wobei das halbkristalline thermoplastische Harz einen Schmelzpunkt T_{f} aufweist,
- Zuführen von zwei fortlaufenden Bändern (P_{2S}, P_{2I}) aus amorphem thermoplastischem Harz von jeweils gegenüberliegenden Seiten des Bandes aus halbkristallinem thermoplastischem Harz, wobei das amorphe thermoplastische Harz eine Glasübergangstemperatur T_{g} hat, welche unter dem Schmelzpunkt T_{f} des halbkristallinen thermoplastischen Harzes liegt,
- Erwärmen der halbkristallinen und amorphen Bänder auf eine Temperatur oberhalb des Schmelzpunkts T_{f} des halbkristallinen thermoplastischen Harzes so, dass die Bänder aus amorphem und halbkristallinem Harz schmelzen, und Walz-Pressen der Bänder aus amorphem thermoplastischem Harz gegen das Band aus halbkristallinem Harz, um diese Bänder in ein einzelnes, fortlaufendes, komprimiertes Band (P) zu vereinigen,
- Zuführen eines Fasermaterials (F),
- Imprägnieren des Fasermaterials mit dem komprimierten Band, um ein verstärktes Band (P') herzustellen; und
- Kühlen des komprimierten Bandes bis eine Temperatur unterhalb des Schmelzpunktes T_{f} des halbkristallinen thermoplastischen Harzes erreicht ist, wobei das Kühlen mit einer Kühlrate durchgeführt wird, die genügend gering ist, um Amorphisierung des halbkristallinen Harzes zu verhindern; und
- Automatisches Laminieren einer Vielzahl von Schichten des komprimierten Bandes bei einer Temperatur oberhalb der Glasübergangstemperatur T_{g} des amorphen thermoplastischen Harzes und unterhalb des Schmelzpunktes T_{f} des halbkristallinen thermoplastischen Harzes.

3. Verfahren nach Anspruch 1 oder 2, bei welchem das halbkristalline thermoplastische Harz PEEK ist.

4. Verfahren nach einem der Ansprüche 1 bis 3, bei welchem das halbkristalline amorphe Harz PEI ist.

5. Verfahren nach einem der vorangehenden Ansprüche, bei welchem das Fasermaterial aus Kohlenstoff-Fasern zusammengesetzt ist.

## Revendications

1. Méthode de fabrication d'un élément composite, **caractérisé en ce qu'**il comprend les étapes suivantes :
✔ la préparation d'une bande à trois couches comprenant les sous-étapes suivantes :
✔ l'avancement d'une bande continue (PR) de résine thermoplastique semi-cristalline renforcée avec un matériau fibreux, ladite résine thermoplastique semi-cristalline ayant un point de fusion T_{f},
✔ l'avancement de deux bandes continues (P_{2S}, P_{2I}) de résine thermoplastique amorphe des côtés opposés de la bande de résine thermoplastique semi-cristalline, respectivement, ladite résine thermoplastique amorphe ayant une température de transition vitreuse T_{g} qui est inférieure au point de fusion T_{f} de la résine thermoplastique semi-cristalline,
✔ le chauffage des bandes semi-cristallines et amorphes à une température permettant de fondre les bandes de résine amorphe et de fondre la bande de résine semi-cristalline uniquement sur sa surface extérieure, et la compression au rouleau des bandes de la résine thermoplastique amorphe contre la bande de résine semi-cristalline de façon à joindre ces bandes en une bande compacte, continue unique (PR'), et
✔ la stratification de la bande compacte ; et
✔ le laminage automatique d'une pluralité de couches de la bande compacte à une température supérieure à la température de transition vitreuse T_{g} de la résine thermoplastique amorphe et inférieure au point de fusion T_{f} de la résine thermoplastique semi-cristalline.

2. Procédé de fabrication d'un élément composite, **caractérisé en ce qu'**il comprend les étapes suivantes :
✔ la préparation d'une bande à trois couches comprenant les sous-étapes suivantes :
✔ l'avancement d'une bande continue (P₁) de résine thermoplastique semi-cristalline, ladite résine thermoplastique semi-cristalline ayant un point de fusion T_{f},
✔ l'avancement de deux bandes continues (P_{2S}, P_{2I}) de résine thermoplastique amorphe des côtés opposés de la bande de résine thermoplastique semi-cristalline, respectivement, ladite résine thermoplastique amorphe ayant une température de transition vitreuse T_{g} qui est inférieure au point de fusion T_{f} de la résine thermoplastique semi-cristalline,
✔ le chauffage des bandes semi-cristallines et amorphes à une température supérieure au point de fusion T_{f} de la résine thermoplastique semi-cristalline, de façon à fondre les bandes de résine amorphe et semi-cristalline et la compression au rouleau des bandes de résine thermoplastique amorphe contre la bande de résine semi-cristalline de façon à joindre ces bandes en une bande compacte, continue unique (P), et
✔ l'avancement d'un matériau fibreux (F),
✔ l'imprégnation du matériau fibreux avec la bande compactée de façon à produire une bande renforcée (P') ; et
✔ le refroidissement de la bande compactée jusqu'à ce qu'une température inférieure au point de fusion T_{f} de la résine thermoplastique semi-cristalline soit atteinte, ledit refroidissement étant à une vitesse de refroidissement suffisamment basse pour empêcher une amorphisation de la résine semi-cristalline ; et
✔ le laminage automatique d'une pluralité de couches de la bande compacte à une température supérieure à la température de transition vitreuse T_{g} de la résine thermoplastique amorphe et inférieure au point de fusion T_{f} de la résine thermoplastique semi-cristalline.

3. Procédé selon la revendication 1 ou la revendication 2, dans lequel la résine thermoplastique semi-cristalline est une PEEK.

4. Procédé selon l'une quelconque des revendications 1 à 3, dans lequel la résine thermoplastique amorphe est une PEI.

5. Procédé selon l'une quelconque des revendications précédentes, dans lequel le matériau fibreux est composé de fibres de carbone.
